# EUROPEAN PATENT APPLICATION

(11) **EP 4 667 424 A1**
(43) Date of publication of application: **24.12.2025**
(21) Application number: 24183404.3
(22) Date of filing: 20.06.2024
(51) Int. Cl.: C02F 1/461, C23F 13/10, C23F 13/18, C25B 9/00, C25B 15/08

(54) **SACRIFICIAL ELECTRODE UNIT AND METHOD FOR APPLYING SUCH SACRIFICIAL ELECTRODE UNIT**

(71) Applicant: thyssenkrupp nucera AG & Co. KGaA, 44269 Dortmund (DE); Tosoh Corporation, Yamaguchi 746-8501 (JP)
(72) Inventor: Hamada, Tsuyoshi, Tamano-City, Okayama, 706-0134 (JP); Kawanishi, Koji, Tamano-City, Okayama, 706-0134 (JP); Tanaka, Masato, Tamano-City, Okayama, 706-0134 (JP); Kishi, Kenta, Tamano-City, Okayama, 706-0134 (JP)
(74) Representative: Meissner Bolte Partnerschaft mbB

(57) **Abstract**

The present invention relates to a sacrificial electrode unit (10) for an electrolyser, comprising: a tube (12) configured to flow electrolyte; a nozzle (14) configured to flow the electrolyte and having a fitting portion (14A) at an end thereof; a sacrificial electrode (16) having a body portion (16A) extending along an axial direction of the nozzle (14) and a flange portion (16B) protruding from an end of the body portion in a direction perpendicular to the axial direction of the nozzle (14); a detachable fastener (17) configured to be tightened with respect to the fitting portion (14A) of the nozzle(14) so that the flange portion (16B) of the sacrificial electrode (16) is detachably retained between the fitting portion (14A) and the fastener (17); and a disc-shaped gasket (18) arranged between the fastener (17) and the fitting portion (14A). The fitting portion (14A) has a flat end surface (14a) perpendicular to the axial direction of the nozzle (14). The flange portion (16B) of the sacrificial electrode (16) is placed on the flat end surface (14a) of the fitting portion (14A) and electrically contacts the flat end surface (14a). The disc-shaped gasket (18) includes an annular groove (18A) to accommodate the flange portion (16B) of the sacrificial electrode (16) and at the same time contacts the flat end surface (14a) of the fitting portion (14A) except for the annular groove (18A) to form a sealing. The sacrificial electrode unit (10) further comprises an elastic element (20) configured to press the flange portion (16B) of the sacrificial electrode (16) against the flat end surface (14a) of the nozzle (14) by its resilience during compression, when the fastener (17) is tightened with respect to the fitting portion (14A) of the nozzle (14).

## Description

### Technical Field

The invention relates to a sacrificial electrode unit. The invention also relates to a method for applying a sacrificial electrode unit to an electrolyser.

### Background

In recent years, there has been a significant increase in interest in using hydrogen as a secondary energy carrier. Among other things, this increased interest is based on the advantages of hydrogen: Hydrogen can be easily produced from water using renewable primary energy, hydrogen is a nontoxic material with a relatively high mass-related energy density, and the chemical energy stored in hydrogen can be easily converted back into electrical energy without releasing significant amounts of carbon dioxide or other greenhouse gases. In addition, hydrogen can also be used as an educt in various chemical processes. One important way of producing hydrogen is by electrolysis of water using an electrolysis cell that comprises a cathode compartment and an anode compartment. In this process hydrogen is generated in the cathode compartment of the electrolysis cell from alkaline aqueous solution, from acidic aqueous solution, or from neutral aqueous solution. The cathode compartment and the anode compartment are typically separated from each other by a separator such as a membrane or diaphragm. Hence, electrolysis, e.g., chlor-alkali electrolysis is used as a hydrogen generator.

Electrolysers for such a process are known comprising a plurality of electrolysis unit cells (referred to simply as "cells" or "elements") arranged in series. Each cell defines an anode chamber and a cathode chamber, which are physically divided by a partition wall within the cell. Separators, such as ion exchange membranes or diaphragms, are arranged between the respective adjacent cells to electrochemically separate the anode chamber and the cathode chamber from each other. In such devices, the supply of electrolyte to each cell and the collection of electrolyte from each cell are carried out using headers, also commonly referred to as manifolds. To this end, a plurality of tubes are provided to connect the manifolds and the respective cells.

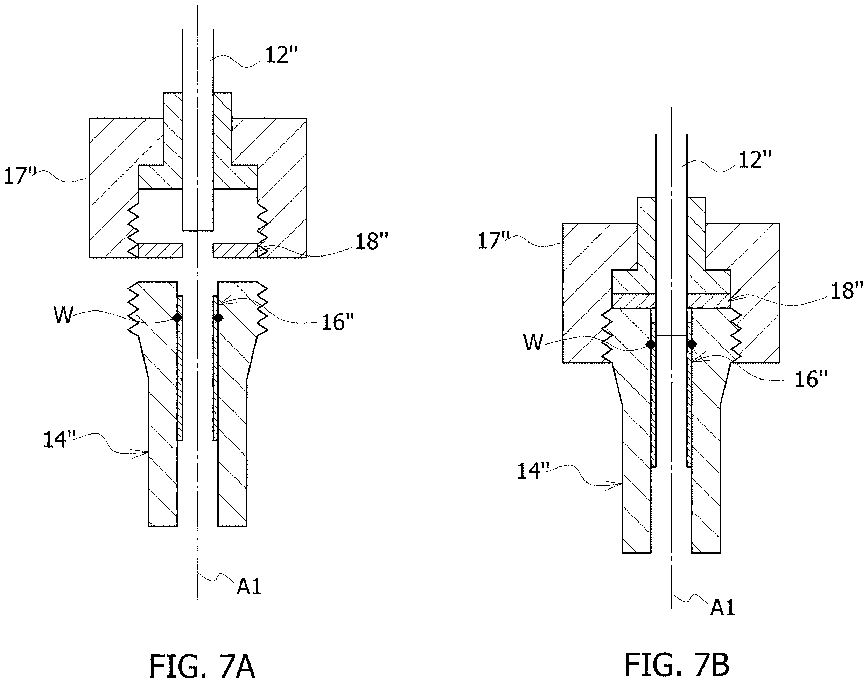

With reference to FIGS. 7A and 7B, an exemplary connection of the tube and the manifold is illustrated. A plurality of branch nozzles 14" (only one of the nozzles is shown in the figure) are provided on the manifold, through which the electrolyte is distributed from the manifold toward the respective cells or collected from the cells into the manifold. The tube 12" is attached to the tip of the nozzle 14" by means of a cap nut 17" that is screwed onto the nozzle 14". To prevent leakage of the electrolyte, a disc-shaped gasket 18" is interposed between the cap nut 17" and the nozzle tip. Further, a sacrificial electrode 16" is welded to the inner wall of the nozzle 14" at a welded portion W to prevent electrolytic corrosion of the nozzle 14". However, if the sacrificial electrode 16" deteriorates due to the corrosion, the deteriorated electrode 16" have to be replaced by a new electrode by cutting off the welded portion W and thereafter welding the new electrode to the inner wall of the nozzle 14". These processes are time consuming and costly.

JP4546329 B2 A discloses a detachable sacrificial electrode, which allows easy replacement. The detachable electrode includes a cylindrical body and a flange portion. To prevent a leakage of electrolyte, an O-ring is placed between the flange portion and the nozzle end face. An annular groove is formed in the nozzle end face to accommodate the O-ring and the flange portion. This conventional system has a drawback; since the nozzle end face must have an annular groove, the detachable sacrificial electrode cannot be applied to an existing nozzle that does not have an annular groove. Hence, the nozzle must be removed from the manifold for machining the annual groove and then welded back onto the manifold after the annular groove is machined.

Therefore, it is the task of the present invention to eliminate one or more of the above disadvantages.

### Summary

According to the present invention, a sacrificial electrode unit for an electrolyser is provided. The sacrificial electrode unit comprises: a tube configured to flow electrolyte; a nozzle configured to flow the electrolyte and having a fitting portion at an end thereof; a sacrificial electrode having a body portion extending along an axial direction of the nozzle and a flange portion protruding from an end of the body portion in a direction perpendicular to the axial direction of the nozzle; a detachable fastener configured to be tightened with respect to the fitting portion of the nozzle so that the flange portion of the sacrificial electrode is detachably retained between the fitting portion and the fastener; and a disc-shaped gasket arranged between the fastener and the fitting portion. The fitting portion has a flat end surface perpendicular to the axial direction of the nozzle. The flange portion of the sacrificial electrode is placed on the flat end surface of the fitting portion and electrically contacts the flat end surface. The disc-shaped gasket includes an annular groove to accommodate the flange portion of the sacrificial electrode and at the same time contacts the flat end surface of the fitting portion except for the annular groove to form a sealing. The sacrificial electrode unit further comprises an elastic element configured to press the flange portion of the sacrificial electrode against the flat end surface of the nozzle by its resilience during compression, when the fastener is tightened with respect to the fitting portion of the nozzle.

According to the invented sacrificial electrode unit, as the sacrificial electrode is not welded to the nozzle, it can easily be removed and replaced with a new electrode, if necessary, especially when the electrode degenerates due to corrosion, whist maintaining good electrical connectivity and sealing between the sacrificial electrode and the nozzle. The sacrificial electrode unit of this invention is particularly advantageous for use on anode side (Ti or Ti alloy) of Chlor-alkali electrolysis. In addition, the invented structure gives effective operation (e.g., easy maintenance) to produce Cl₂ gas ,H₂ gas and NaOH (or KOH) produced in clhor-alkali industry.

Further embodiments are given in the dependent claims.

### Brief Description of the Drawings

FIG. 1 shows a part of a bipolar electrolyser comprising a plurality of electrolysis cells;
FIG. 2 shows an external view of the electrolyser;
FIG. 3A shows an unassembled sacrificial electrode unit according to an embodiment of the present invention;
FIGS. 3B shows the sacrificial electrode unit of FIG. 3A as being assembled;
FIG. 4A shows a side view of a sacrificial electrode of the sacrificial electrode unit of FIGS. 3A and 3B;
FIG. 4B shows a sectional view of the sacrificial electrode of FIG. 4A along A-A line;
FIG. 5A shows an unassembled sacrificial electrode unit according to another embodiment of the present invention;
FIG. 5B shows the sacrificial electrode unit of FIG. 5A as being assembled;
FIG. 6A shows an unassembled sacrificial electrode unit according to yet another embodiment of the present invention;
FIG. 6B shows the sacrificial electrode unit of FIG. 6A as being assembled;
FIG. 7A shows an unassembled sacrificial electrode unit according to a comparative example as not being part of the present invention;
FIG. 7B shows the sacrificial electrode unit of FIG. 7A as being assembled.

### Detailed Description

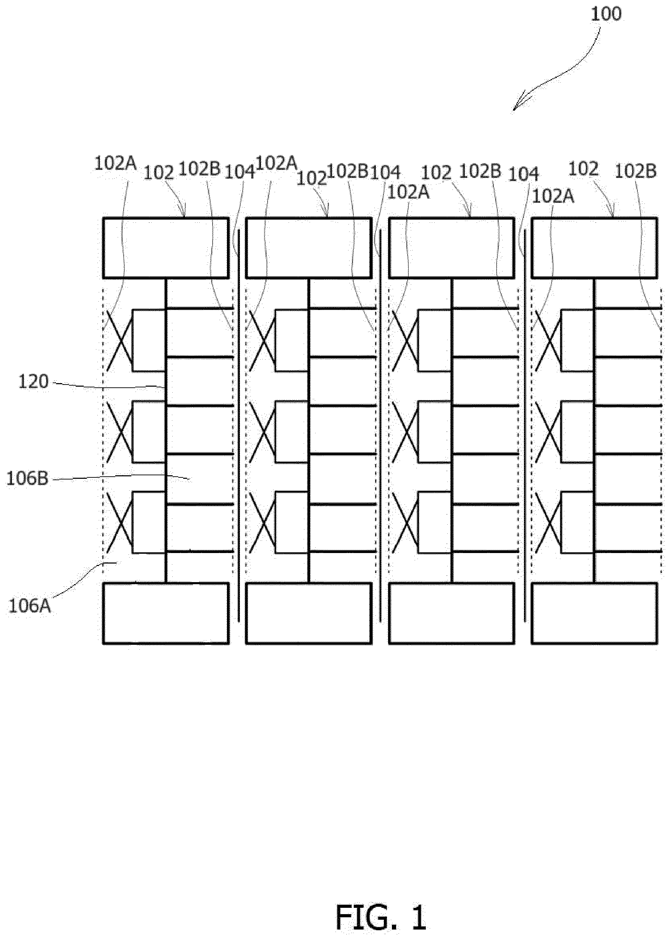

One exemplary electrolyser to which the invented sacrificial electrode unit may be applied is a bipolar electrolyser, such as ion-exchange membrane process electrolyser, in which a plurality of bipolar electrolysis cells are arranged in series, with an ion exchange membrane or diaphragm as a gas separator being interposed between the respective adjacent cells (FIG. 1). So-called filter press technology may be utilized to join the adjacent cells so that there is substantially no gap between electrode elements on both sides of the separator. However, the electrolyser may be a monopolar electrolyser in which each cell has either a cathode or anode electrode element on the side (not shown).

The electrolyser in which the invented sacrificial electrode unit is applied may be used for Chlor-Alkali electrolysis. In another example, the electrolyser may be used for alkaline water electrolysis (AWE). More generally, the electrolyser may be applicable to any electrolysis process using a plurality of unit cells arranged in series, with an electrochemical separator being interposed between the respective adjacent unit cells.

FIG. 1 shows a cross-sectional view of an exemplary electrolyser 100 to which the invented sacrificial electrode unit may be applied. The electrolyser 100 includes a plurality of electrolysis unit cells 102, each of which comprises a first electrode element 102A (e.g., cathode), a second electrode element 102B (e.g., anode). Gas separators 104 are interposed between the respective adjacent cells 102. The electrolysis cell 102 further comprises a first compartment 106A (e.g. cathode chamber), a second compartment 106B (e.g., anode chamber) and current collectors to support the electrode elements. The current collectors may also be referred as part of electrode structures. The first and second compartments 106A, 106B are physically divided from each other by a rear wall or partition wall 120. The partition wall 120 faces the separators 104 over the first and second compartments 106A, 106B, and define these compartments together with the separators 104.

Each separator 104 has a first surface side and a second surface side, wherein the first surface side contacts the first compartment 106A and the second surface side contacts the second compartment 106B for electrochemically interconnecting the first compartment 106A and the second compartment 106B of the adjacent cells 102. The separator 104 may be ion-exchange membrane. Alternatively, the separator 104 may be porous diaphragm, particularly an ion-permeable diaphragm. Ion-permeable diaphragms do not allow gases generated by the electrochemical reaction to permeate, but have ion-exchange function. The separator 104 may be a polymeric porous membrane, inorganic porous membrane, woven or nonwoven fabrics, or the like.

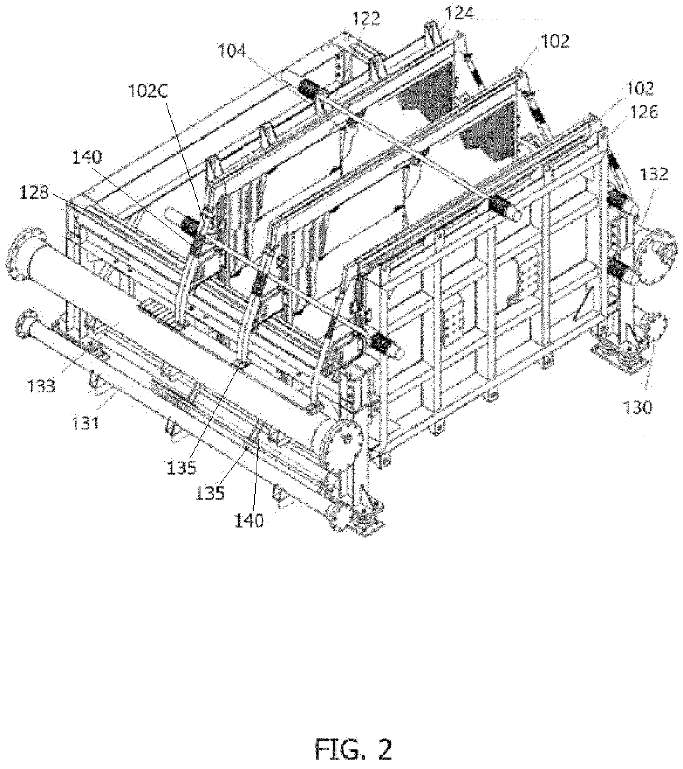

FIG. 2 shows an external view of the electrolyser 100. Reference numeral 102 in the figure indicates the electrolysis unit cell. A plurality of tie rods 122 may be provided to apply pressure to a pressure plate 124 for moving this plate against a support plate 126 and further to between the adjacent cells 102. Instead, one or more hydraulic cylinders for moving the pressure plate 124 may be provided. Adjacent the pressure plate 124, a terminal cell 102, which functions as an cathode, is arranged. The support plate 126 is disposed on the other side of the electrolyser 100, and the other terminal cell 102 functioning as a anode is disposed adjacent to this support plate 126. The cells 102 are suspended from a cell hanger 128, which is part of a frame. A plurality of headers or manifolds 130-133 are provided on both sides of the cells 102, namely a first electrolyte supply manifold 130 for supplying electrolyte (e.g. catholyte) to the first compartments 106A of the cells 102, a second electrolyte supply manifold 131 for supplying electrolyte (e.g. anolyte) to the second compartments 106B of the cells 102, a first electrolyte discharge manifold 132 for discharging the electrolyte from the first compartments 106A of the cells, and a second electrolyte discharge manifold 133 for discharging the electrolyte from the second compartments 106B of the cells 102. Each manifold is equipped with a number of nozzles 135. Similarly, the cells 102 are also equipped with nozzles 102C for the electrolyte supply and discharge, respectively. The nozzles 135 of the manifolds 130-133 are fluidly connected to the nozzles 102C of the respective cells 102 via respective tubes 140.

In order to reduce or prevent electrolytic corrosion of the nozzles 102C, 135, sacrificial electrodes may be provided in the vicinity of the nozzles 102C, 135, in particular upstream of the nozzles 102C, 135 in the direction of electrolyte flow.

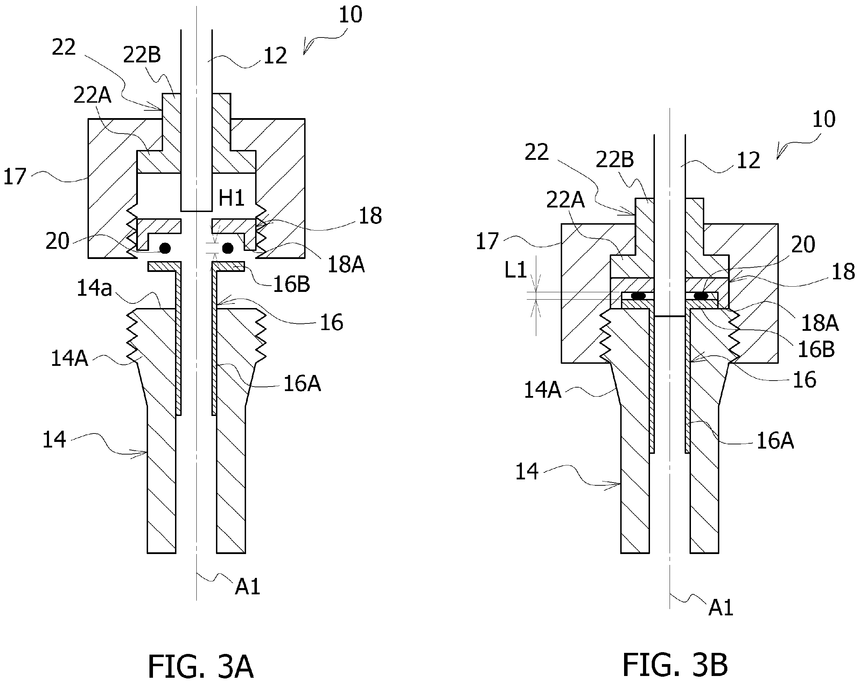

FIG. 3A shows a cross-sectional view of a sacrificial electrode unit 10 according to an embodiment of the present invention. The sacrificial electrode unit 10 for an electrolyser 100 comprises a tube 12 configured to flow electrolyte. This tube 12 may be the tube 140 connecting the cell 102 to any of the manifolds 130-133. Preferably, the tube 12 is made of non-metallic material, more preferably of flexible material, more preferably of flexible and electrically insulating material. More preferably, the tube 12 is made of fluororesin, because of the chemical properties for resistance to corrosive agents such as chlorine gas, hydrogen gas, and caustic soda. Examples of the fluororesin include, but are not limited to, Perfluoroalkoxy alkanes (PFA), Polytetrafluoroethylene (PTFE), Fluorinated ethylene propylene (FEP), Ethylenetetrafluoroethylene (ETFE), Polyvinylidenedifluoride (PVDF) or the like. Preferably, the tube 12 is transparent or translucent, particularly when the sacrificial electrode is located in the tube 12.

The sacrificial electrode unit 10 also includes a nozzle 14 configured to flow the electrolyte and having a fitting portion 14A at an end thereof. This nozzle 14 may be formed by the nozzle 102C of the cell 102 or the nozzle 135 of the manifold 130-133. In other words, the invented sacrificial electrode unit may be arranged between any of the manifolds 130-131 and the tube 140 and/or between the tube 140 and the cell 102 (see, FIG. 2), depending on the need to reduce or prevent the electrolytic corrosion.

The nozzle 14 may be made of metal, preferably of titanium or titanium alloy, and more preferably of titanium-palladium alloy. Alternatively, the nozzle 14 may be made of stainless steel.

The fitting portion 14A of the nozzle 14 has a flat end surface 14a perpendicular to the axial direction A1 of the nozzle 14.

As in the illustrated example, the fitting portion 14A may include a thread formed on the outer surface of the nozzle tip. In other examples, the fitting portion 14A may form part of a bayonet connection, or part of a fluid coupling known as the quick connect coupling or quick connect fitting.

In relation to the fitting portion 14A, the sacrificial electrode unit 10 comprises a detachable fastener 17 configured to be tightened with respect to the fitting portion 14A of the nozzle 14. As in the illustrated example, the fastener 17 may include a thread formed on the inner surface of the fastener 17. In this example, the fastener 17 is a cap nut. In other examples, the fitting portion 14A may form part of a bayonet connection, or part of a fluid coupling known as the quick connect coupling or quick connect fitting.

The sacrificial electrode unit 10 further includes a sacrificial electrode 16 having a body portion 16A extending along the axial direction A1 of the nozzle 14 and a flange portion 16B protruding from an end of the body portion 16A in a direction perpendicular to the axial direction A1 of the nozzle A1.

The sacrificial electrode 16 used on the anode side may be made of titanium or may have an oxide layer such as titanium, ruthenium, or iridium layer on the surface of titanium base. The sacrificial electrode 16 used on the cathode side may be made of nickel.

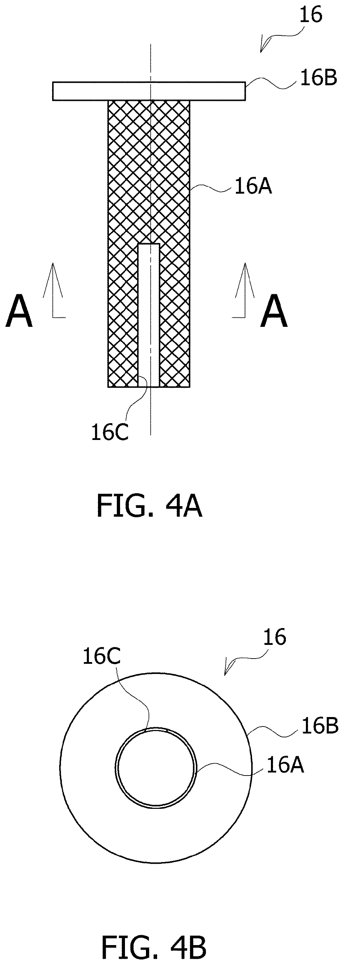

The body portion 16A of the sacrificial electrode 16 may have a cylindrical shape. As shown in FIG. 4A, the body portion 16A of the sacrificial electrode 16 may be formed of a mesh or have a number of holes to increase the contact area with the electrolyte. To facilitate insertion of the body portion 16A of the sacrificial electrode 16 into the nozzle 14 or tube 12, a slit or cut 16C may be formed in the body portion 16A of the sacrificial electrode 16.

As shown in FIG. 3B, the flange portion 16B of the sacrificial electrode 16 is detachably retained between the fitting portion 14A of the nozzle 14 and the fastener 17.

It is important to note here that the sacrificial electrode 16 is not welded to the nozzle 14, so that it can be removed, if necessary, by simply pulling it out, especially when the electrode 16 degenerates due to corrosion. This means that the sacrificial electrode 16 may be replaced more easily and at a lower cost compared to the sacrificial electrode unit 10 where the sacrificial electrode 16" is welded to the nozzle 14" as shown in FIGS. 7A and 7B. At the same time, however, this poses the risk of deteriorations in the electrical contact and sealing between the sacrificial electrode 16 and the nozzle 14.

To solve these problems, the invented sacrificial electrode unit 10 further employs a disc-shaped gasket 18 and an elastic element 20.

The disc-shaped gasket 18 is arranged between the fastener 17 and the fitting portion 14A of the nozzle 14.

The flange portion 16B of the sacrificial electrode 16 is placed on the flat end surface 14a of the fitting portion 14A and electrically contacts the flat end surface 14a. In order to improve the electrical contact between the flange portion 16B of the sacrificial electrode 16 and the nozzle 14, the resilience of the elastic element 20 is used. To this end, the disc-shaped gasket 18 includes an annular groove 18A to accommodate the flange portion 16B of the sacrificial electrode 16 and at the same time contacts the flat end surface 14a of the fitting portion 14A except for the annular groove 18A to form a sealing. Furthermore, the elastic element 20 is configured to press the flange portion 16B of the sacrificial electrode 16 against the flat end surface 14a of the nozzle 14 by its resilience during compression when the fastener is tightened with respect to the fitting portion 14A of the nozzle 14. As can be seen, the elastic element 20 may improve the electrical contact between the flange portion 16B of the sacrificial electrode 16 and the nozzle end surface 14a, rather than forming a sealing therebetween. Of course, such a sealing function could be expected for some types of sealing element 20.

It is preferable that the elastic element 20 has a ring shape. This may result in uniform annular contact between the flange portion 16B of the sacrificial electrode 16 and the nozzle end surface 14a. It is more preferable that the elastic element 20 is an O-ring, more preferably the elastic element is made of rubber. The elastic element may be a coil spring or a disc spring, but rubber is more preferable. The material for the rubber elastic element may be selected to have resistance to corrosive agents such as chlorine gas, hydrogen gas, brine, acidic aqueous solution and caustic soda. Examples of the rubber material include: ethylenepropylene rubber (EPM), ethylenepropylenediene rubber (EPDM) or fluoroelastomers (FPM, FKM, FFKM and the like).

The disc-shaped gasket 18 includes an annular groove 18A to accommodate the flange portion 16B of the sacrificial electrode 16 and at the same time contacts the flat end surface 14a of the fitting portion 14A except for the annular groove 18A to form a sealing. The sealing area between the flange portion 16B and the flat end surface 14a is formed outside the annular groove 18A viewed in the radial direction of the nozzle 14. Preferably, the sealing area overlaps the cap portion of the cap nut 17 (the overhanging portion towards the tube 12), viewed in the axial direction A1 of the nozzle 14. This ensures that the tightening force from the cap nut 17 is transmitted to the sealing area in an effective manner, leading to a further improved sealing.

The annular groove 18A in the gasket 18 may also prevent the elastic element (e.g. O-ring) from being displaced due to the pressure of the electrolyte, or when assembling.

In order to improve electrical contact between the flange portion 16B of the sacrificial electrode 16 and the nozzle end surface 14a, the elastic element 20 is configured to press the flange portion 16B of the sacrificial electrode 16 against the flat end surface 14a of the nozzle 14 by its resilience during compression when the fastener 17 is tightened with respect to the fitting portion 14A of the nozzle 14.

It is preferable that the elastic element 20 is arranged in the annular groove 18A of the disc-shaped gasket 18 and on a surface of the flange portion 16B opposite to the flat end surface 14a of the fitting portion 14A, wherein the elastic element 20 being configured to be compressed between the flange portion 16B of the sacrificial electrode 16 and the disc-shaped gasket 18, with an aid of the fastener 17 tightened with respect to the fitting portion 14A of the nozzle 14.

In order to ensure that the flange portion 16B of the sacrificial electrode 16 is pressed against the flat end surface 14a of the nozzle 14 and the electrical contact is thus improved, a height H1 (see, FIG. 3A) of the elastic element 20 measured along the axial direction A1 in an uncompressed state is 1.1 to 2 times, preferably 1.3 to 1.8 times, more preferably 1.4 to 1.6 times, a distance L1 (see, FIG. 3B) between a bottom of the annular groove 18A of the gasket 18 and a surface of the flange potion 16B facing said bottom, which is measured along the axial direction when the fastener 17 is not yet tightened. This distance L1 can also be determined by subtracting the thickness of the flange portion 16B of the sacrificial electrode 16 from the depth of the annular groove 18A of the gasket 18 in the unassembled state as shown in FIG. 3A. If the height H1 of the elastic element 20 is too small with respect to the distance L1, the resilience of the elastic element 20 when compressed may correspondingly be small and good electrical contact might not thus be achieved. Conversely, if the height H1 of the elastic element 20 is too large with respect the distance L1, the resilience of the elastic element 20 may be correspondingly large, which might impede contact between the peripheral part of the gasket 18 and the nozzle end surface 14a, resulting in a poor sealing between the gasket 18 and the nozzle 14.

It is preferable that the disc-shaped gasket 18 is made of a material that is more rigid than the elastic element 20. This ensures that the elastic element 20 is compressed before the gasket 18 is compressed so that after good electrical contact has been established between the flange portion 16B of the sacrificial electrode 16 and the nozzle end face 14a, and thereafter the sealing is established between the gasket 18 and the nozzle end surface 14a. More preferably, the disc-shaped gasket is made of fluororesin, more preferably of polytetrafluoroethylene (PTFE).

As in the illustrated embodiment, the sacrificial electrode unit 10 may further comprise a bush 22 arranged between the fastener 17 and the disc-shaped gasket 18, wherein the bush 22 includes a base 22A to press the disc-shaped gasket 18 with the aid of the fastener 17 tightened with respect to the fitting portion 14A of the nozzle 14, and a support wall 22B extending from the base 22A along the tube 12. The base 22A of the bush 22 helps the fastener 17 press the gasket 18 in a uniform manner. For this purpose, it is preferable that the respective mating surfaces of the base 22A and gasket 18 facing to each other are identical in shape and size. The support wall 22B of the bush 22 may penetrate into the opening of the cap nut 17 and extend further therefrom along the tube 12. In a preferable embodiment, the bush 22 is adhered to the tube 12. More specifically, the inner wall of the bush 22 may be adhered to the outer wall of the tube 12, so that the tube 12 is physically connected to the nozzle 14 via the bush 22 and the fastener 17.

It should be noted that although in the illustrated example, the tube 12 extends into the sacrificial electrode 16, the tube 12 may terminate before the sacrificial electrode 16. In this case, in a more preferred example, the terminal end of the tube 12 is located between the radially extending surface (bottom surface) of the annular groove 18A of the gasket 18 and the opposing surface of the flange 16B. In a further preferred example, one or more convex portions or an annular convex is formed on the outer surface of the terminal end of the tube 12 so that the one or more convex portions or annular convex engages with said bottom surface of the annular groove 18A of the gasket 18. This allows the gasket 18 to be retained on the outer surface of the tube 12, facilitating assembly.

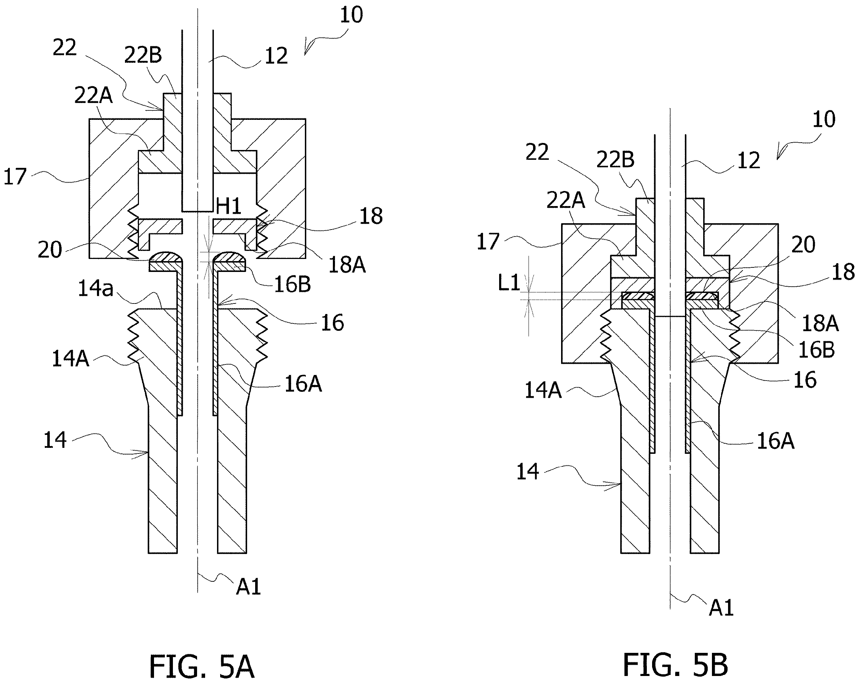

With reference to FIGS. 5A and 5B, another embodiment of the present invention is described. In this embodiment, the elastic element 20 may be moulded on the flange portion 16B of the sacrificial electrode 16. For example, the elastic element 20 may be made of injection-mouldable material. A pre-prepared flanged sacrificial electrode 16 may be placed inside the mould as an insert and the elastic element may then be injection-moulded on the flange portion 16B of this insert 16. The explanations made with reference to FIGS. 1 to 4 are equally applicable to this embodiment with reference to the same reference numbers.

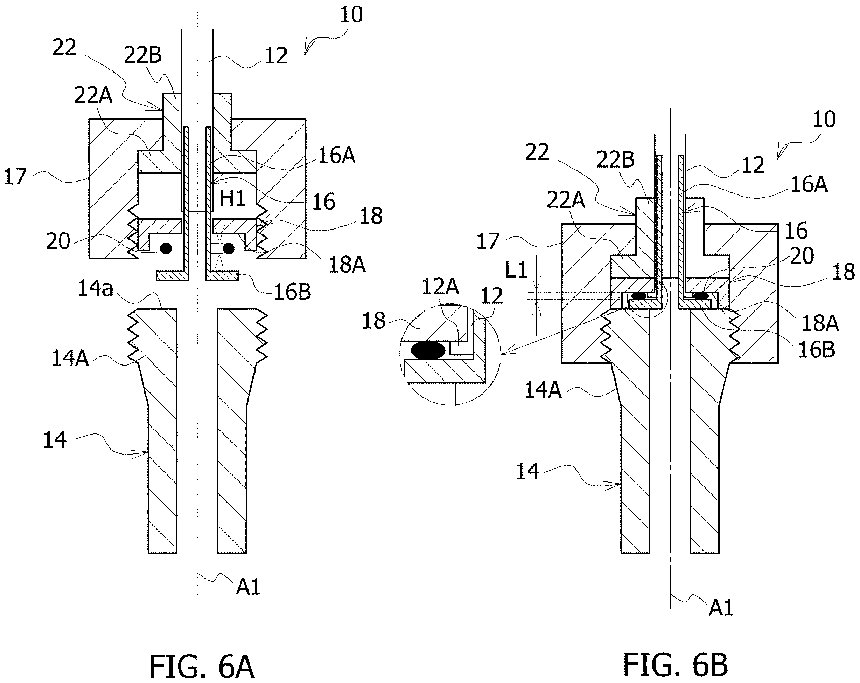

With reference to FIGS. 6A and 6B, another embodiment of the present invention is described. In this embodiment, the body portion 16A of the sacrificial electrode 16 is located in the tube 12. This enables operators or the like to check the degree of corrosion of the body portion 16A of the sacrificial electrode 16 through the wall of the tube 12. For this purpose, the tube 12 should preferably be transparent or translucent. In this example, the tube 12 may be retained in place by the support wall 22B of the bush 22 and the body portion 16A of the sacrificial electrode 16 that is also fixed to the nozzle 14 with the fastener 17.

It should be noted that although in the example illustrated in FIG. 6A, the tube 12 is adhered to the bush 22 to extend far over the gasket 18, the tube 12 may terminate between the radially extending surface (bottom surface) of the annular groove 18A of the gasket 18 and the opposing surface of the flange 16B, as shown in FIG. 6B. In a further preferred example, as shown in FIG. 6B, one or more convex portions or an annular convex 12A is formed on the outer surface of the terminal end of the tube 12 so that the one or more convex portions or annular convex 12 engages with said bottom surface of the annular groove 18A of the gasket 18. This allows the gasket 18 to be retained on the outer surface of the tube 12, facilitating assembly. That is, the tube 12, bush 22, gasket 18 and fastener 17 may be assembled as one part in advance.

Referring again to FIGS. 3 and 5, a method for applying, preferably retroactively applying, a sacrificial electrode unit according to the preset invention to an electrolyser, can be confirmed. As discussed above, the electrolyser 100 comprises a nozzle 102C, 135 to flow electrolyte as being also the nozzle 14 of the sacrificial electrode unit 10. The method comprise: inserting the body portion 16A of the sacrificial electrode 16 into the nozzle until the flange portion 16B of the sacrificial electrode 16 contacts the flat end surface 14a of the nozzle 14, 102, 135; arranging the elastic element 20 onto the flange portion 16B of the sacrificial electrode 16; placing the disc-shaped gasket 18 onto the flat end surface 14a of the fitting portion 14A whilst accommodating the flange portion 16B and the elastic element 20 in the annular groove 18A of the gasket 18; tightening the fastener 17 with respect to the fitting portion 14A of the nozzle 14 so that the elastic element 20 presses the flange portion 16B of the sacrificial electrode 16 against the flat end surface 14a of the nozzle 14 by its resilience during compression caused when the fastener 17 is tightened.

As shown in FIGS. 6A and 6B, it is preferable in this method that the nozzle 14 is an existing nozzle 14" (see, FIG. 7) in which an existing sacrificial electrode 16" is welded thereto; and the body potion 16A of the sacrificial electrode 16 is inserted into the tube 12, preferably without removing the welded existing sacrificial electrode 16" from the existing nozzle 14". According to this method, the sacrificial electrode unit 10 of the invention can easily (i.e., retroactively) be applied to existing nozzles 14". Also, in contrast to the sacrificial electrode unit disclosed in JP 4546329 B2, there is no need to form a groove for the O-ring on the (existing) nozzle end surface.

### Reference sign list

- 10: sacrificial electrode unit
- 12: tube
- 14: nozzle
- 14A: fitting portion
- 14a: flat end surface
- 16: sacrificial electrode
- 16A: body portion
- 16B: flange portion
- 17: detachable fastener
- 18: disc-shaped gasket
- 18A: annular groove
- 20: elastic element
- A1: axial direction of nozzle

## Claims

1. A sacrificial electrode unit (10) for an electrolyser, comprising:
a tube (12) configured to flow electrolyte;
a nozzle (14) configured to flow the electrolyte and having a fitting portion (14A) at an end thereof;
a sacrificial electrode (16) having a body portion (16A) extending along an axial direction (A1) of the nozzle (14) and a flange portion (16B) protruding from an end of the body portion (16A) in a direction perpendicular to the axial direction (A1) of the nozzle (14);
a detachable fastener (17) configured to be tightened with respect to the fitting portion (14A) of the nozzle (14) so that the flange portion of the sacrificial electrode (16) is detachably retained between the fitting portion (14A) and the fastener (17); and
a disc-shaped gasket (18) arranged between the fastener (17) and the fitting portion (14A),
wherein the fitting portion (14A) has a flat end surface (14a) perpendicular to the axial direction (A1) of the nozzle (14),
wherein the flange portion (16B) of the sacrificial electrode (16) is placed on the flat end surface (14a) of the fitting portion (14) and electrically contacts the flat end surface (14a), and
wherein the disc-shaped gasket (18) includes an annular groove (18A) to accommodate the flange portion (16B) of the sacrificial electrode (16) and at the same time contacts the flat end surface (14a) of the fitting portion (14A) except for the annular groove (18A) to form a sealing,
the sacrificial electrode unit (10) further comprising:
an elastic element (20) configured to press the flange portion (16B) of the sacrificial electrode (16) against the flat end surface (14a) of the nozzle (14) by its resilience during compression, when the fastener (17) is tightened with respect to the fitting portion (14A) of the nozzle (14).

2. The sacrificial electrode unit (10) according to claim 1, wherein the elastic element (20) has a ring shape, preferably the elastic element (20) is an O-ring, more preferably the elastic element (20) is made of rubber.

3. The sacrificial electrode unit (10) according to claim 1 or 2, wherein
the elastic element (20) is arranged in the annular groove (18A) of the disc-shaped gasket (18) and on a surface of the flange portion (16B) opposite to the flat end surface (14a) of the fitting portion (14A), and
the elastic element (20) is configured to be compressed between the flange portion (16B) of the sacrificial electrode (16) and the disc-shaped gasket (18), with an aid of the fastener (17) tightened with respect to the fitting portion (14A) of the nozzle (14).

4. The sacrificial electrode unit (10) according to any one of claims 1 to 3, wherein the elastic element (20) is moulded on the flange portion (16B) of the sacrificial electrode (16).

5. The sacrificial electrode unit (10) according to any one of claims 1 to 4, a height (H1) of the elastic element (20) in an uncompressed state is 1.1 to 2 times, preferably 1.3 to 1.8 times, more preferably 1.4 to 1.6 times, a distance (L1) between a bottom of the annular groove (18A) of the gasket (18) and a surface of the flange potion (16B) facing said bottom when the fastener (17) is not tightened.

6. The sacrificial electrode unit (10) according to any one of claims 1 to 5, wherein the tube (12) is made of non-metallic material, more preferably of flexible material, more preferably of flexible and electrically insulating material, more preferably of fluororesin.

7. The sacrificial electrode unit (10) according to any of claims 1 to 6, wherein the tube (12) is transparent or translucent.

8. The sacrificial electrode unit (10) according to any one of claims 1 to 7, wherein the nozzle (14) is made of metal, preferably of titanium or titanium alloy, and more preferably of titanium-palladium alloy.

9. The sacrificial electrode unit (10) according to any one of claims 1 to 8, wherein the disc-shaped gasket (18) is made of a material that is more rigid than the elastic element (20), preferably the disc-shaped gasket (18) is made of fluororesin, more preferably of polytetrafluoroethylene (PTFE).

10. The sacrificial electrode unit (10) according to any one of claims 1 to 9, further comprising a bush (22) arranged between the fastener (17) and the disc-shaped gasket (18), the bush (22) including a base (22A) to press the disc-shaped gasket (18) against the flat end surface (14a) of the nozzle (14) with the aid of the fastener (17) tightened with respect to the fitting portion (14A) of the nozzle (14), and a support wall (22B) extending from the base (22A) along the tube (12), preferably through the fastener (17),
preferably wherein the tube (12) is adhered to the bush (12).

11. The sacrificial electrode unit (10) according to any one of claims 1 to 10, wherein the body portion (16A) of the sacrificial electrode (16) has a cylindrical shape.

12. The sacrificial electrode unit (10) according to any one of claims 1 to 11, wherein the body portion (16A) of the sacrificial electrode (16) is located in the nozzle (14).

13. The sacrificial electrode unit (10) according to any one of claims 1 to 11, wherein the body portion (16A) of the sacrificial electrode (16) is located in the tube (12).

14. A method for applying, preferably retroactively applying, a sacrificial electrode unit (10) according to any of claims 1 to 13 to an electrolyser (100), the electrolyser (100) comprising a nozzle (102, 135) to flow electrolyte as being also a nozzle (14) of the sacrificial electrode unit (10), comprising:
inserting the body potion (16A) of the sacrificial electrode (16) into the nozzle (14, 102, 135) or the tube (12, 140) until the flange portion (16B) of the sacrificial electrode (16) contacts the flat end surface (14a) of the nozzle (14, 102, 135);
arranging the elastic element (20) onto the flange portion (16B) of the sacrificial electrode (16);
placing the disc-shaped gasket (18) onto the flat end surface (14a) of the fitting portion (14A) whilst accommodating the flange portion (16B) and the elastic element (20) in the annular groove (18A) of the gasket (18);
tightening the fastener (17) with respect to the fitting portion (14A) of the nozzle (14) so that the elastic element (20) presses the flange portion (16B) of the sacrificial electrode (16) against the flat end surface (14a) of the nozzle (14) by its resilience during compression caused when the fastener (17) is tightened.

15. The method according to claim 14, wherein:
the nozzle (14, 102, 135) is an existing nozzle (14") in which an existing sacrificial electrode (16") is welded thereto; and
the body potion (16A) of the sacrificial electrode (16) according to any one of claims 1 to 13 is inserted into the tube (12, 140), preferably without removing the welded existing sacrificial electrode (16") from the existing nozzle (14").
